# EUROPÄISCHE PATENTANMELDUNG

(11) **EP 3 958 077 A1**
(43) Veröffentlichungstag der Anmeldung: **23.02.2022**
(21) Anmeldenummer: 21191879.2
(22) Anmeldetag: 18.08.2021
(51) Int. Cl.: G05B 19/416

(54) **VERFAHREN ZUM BEARBEITEN VON WERKSTÜCKEN, STEUERUNGSEINRICHTUNG FÜR EINE BEARBEITUNGSEINRICHTUNG SOWIE BEARBEITUNGSEINRICHTUNG**

(30) Priorität: 20.08.2020 DE 102020121850
(71) Anmelder: HOMAG GmbH, 72296 Schopfloch (DE)
(72) Erfinder: Kalmbach, Wilhelm, 72296 Schopfloch (DE)
(74) Vertreter: Hoffmann Eitle

(57) **Zusammenfassung**

Die Erfindung betrifft ein Verfahren zum Bearbeiten von Werkstücken (11), die bevorzugt zumindest teilweise aus Holz, Holzwerkstoffen, Kunststoff, Verbundwerkstoff oder dergleichen ausgebildet sind, durch eine Bearbeitungseinrichtung (10), wobei die Werkstücke (11) mittels einer Fördereinrichtung (13) in einer Durchlaufrichtung (D) zu einem Bearbeitungsaggregat (12) der Bearbeitungseinrichtung (10) bewegt werden, wobei die Förderbewegung der Fördereinrichtung (13) zum Ausführen des Bearbeitungsvorgangs für jedes Werkstück (11) in Abhängigkeit von wenigstens einem Werkstückparameter des zu bearbeitenden Werkstücks (11) angepasst wird, Steuerungseinrichtung für eine Bearbeitungseinrichtung zum Bearbeiten von Werkstücken (11) sowie eine Bearbeitungseinrichtung (10) zum Bearbeiten von Werkstücken (11).

## Beschreibung

### Technisches Gebiet

Die Erfindung betrifft ein Verfahren zum Bearbeiten von Werkstücken, eine Steuerungseinrichtung für eine Bearbeitungseinrichtung sowie eine Bearbeitungseinrichtung zum Bearbeiten von Werkstücken.

### Stand der Technik

Es sind Bearbeitungseinrichtungen zum Bearbeiten von Werkstücken bekannt, insbesondere Holzbearbeitungseinrichtungen, die als Durchlaufmaschine ausgebildet sind. Bei diesen werden die zu bearbeitenden Werkstücke durch eine Fördereinrichtung in einer Durchlaufrichtung zu einem Bearbeitungsaggregat bewegt, wobei der Bearbeitungsvorgang während der Förderbewegung der Werkstücke durchgeführt wird. Mit solchen Bearbeitungseinrichtungen können gleichartige Werkstücke in größeren Stückzahlen bearbeitet werden. Auch die Bearbeitung verschiedenartiger Werkstücke, beispielsweise Werkstücke mit unterschiedlichen Abmessungen, ist durch solche Bearbeitungseinrichtungen ermöglicht. Da jedoch die Fördergeschwindigkeit der Werkstücke auf den Bearbeitungsvorgang abgestimmt sein muss, wird die maximale Fördergeschwindigkeit durch dasjenige Werkstück bestimmt, welches die längste Bearbeitungszeit erfordert. Daraus resultiert eine signifikante Leistungsbeschränkung der Bearbeitungseinrichtung.

### Darstellung der Erfindung

Der Erfindung liegt die Aufgabe zugrunde, ein Verfahren vorzuschlagen, durch welches bei der Bearbeitung verschiedenartiger Werkstücke durch eine Bearbeitungseinrichtung eine Verkürzung der Bearbeitungszeit erreicht ist. Zudem ist es Aufgabe der Erfindung eine Steuerungseinrichtung vorzuschlagen, die eine dynamische Steuerung einer Bearbeitungseinrichtung ermöglicht. Des Weiteren ist es Aufgabe der Erfindung eine Bearbeitungseinrichtung vorzuschlagen, durch welche eine effiziente Bearbeitung verschiedenartiger Werkstücke ermöglicht ist.

Ein Verfahren zum Bearbeiten von Werkstücken ist in Anspruch 1 definiert. Eine Steuerungseinrichtung für eine Bearbeitungseinrichtung ist in Anspruch 7 definiert. Eine Bearbeitungseinrichtung zum Bearbeiten von Werkstücken ist in Anspruch 9 definiert. Unteransprüche beziehen sich auf bestimmte Ausführungsformen.

Die Aufgabe wird durch ein Verfahren zum Bearbeiten von Werkstücken, die bevorzugt zumindest teilweise aus Holz, Holzwerkstoffen, Kunststoff, Verbundwerkstoff oder dergleichen ausgebildet sind, durch eine Bearbeitungseinrichtung, wobei die Werkstücke mittels einer Fördereinrichtung in einer Durchlaufrichtung zu einem Bearbeitungsaggregat der Bearbeitungseinrichtung bewegt werden und das Bearbeitungsaggregat zum Ausführen eines Bearbeitungsvorgangs relativ zu den sich in Durchlaufrichtung bewegenden Werkstücken verfahren wird, gelöst, wobei die Förderbewegung der Fördereinrichtung zum Ausführen des Bearbeitungsvorgangs für jedes Werkstück in Abhängigkeit von wenigstens einem Werkstückparameter des zu bearbeitenden Werkstücks angepasst wird.

Auf diese Weise kann bei der Bearbeitung der Werkstücke für jedes Werkstück eine angepasste Förderbewegung ausgeführt werden. Dies ermöglicht eine dynamisch regelbare Förderbewegung für jedes zu bearbeitende Werkstück. Indem die Förderbewegung in Abhängigkeit von wenigstens einem Werkstückparameter angepasst wird, können diese sowie der Bearbeitungsvorgang individuell auf das jeweilige zu bearbeitende Werkstück abgestimmt werden. Insbesondere kann jedes Werkstück somit für deren Bearbeitung mit einer auf den wenigstens einen Werkstückparameter angepassten Fördergeschwindigkeit gefördert werden, woraus eine Verkürzung der Bearbeitungszeiten und folglich eine signifikante Steigerung der Leistungsfähigkeit der Bearbeitungseinrichtung erreicht werden können.

In einer vorteilhaften Weiterbildung des Verfahrens kann vorgesehen sein, dass die Förderbewegung des zu bearbeitenden Werkstücks in Abhängigkeit von wenigstens einem zwischen den zu bearbeitenden Werkstücken abweichenden Werkstückparameter angepasst wird.

Dadurch kann die Förderbewegung angepasst werden, sofern sich aufeinanderfolgend zu bearbeitende Werkstücke in wenigstens einem Werkstückparameter unterscheiden. Bei der aufeinanderfolgenden Bearbeitung von Werkstücken mit identischen oder ähnlichen Werkstückparametern kann dagegen eine konstante Förderbewegung ausgeführt werden.

Eine bevorzugte Ausgestaltung des Verfahrens kann vorsehen, dass die Förderbewegung der Fördereinrichtung in Abhängigkeit von wenigstens einer Werkstücklänge, einer Werkstückdicke, einer Werkstückbreite und/oder einer Werkstückkontur des zu bearbeitenden Werkstücks angepasst wird.

Anhand dieser Werkstückparameter kann eine exakte Charakterisierung der Werkstücke ermöglicht sein, so dass die Förderbewegung anhand der Werkstückparameter präzise auf den durch das Bearbeitungsaggregat auszuführenden Bearbeitungsvorgang abgestimmt werden kann.

Eine weitere bevorzugte Ausgestaltung des Verfahrens kann vorsehen, dass der wenigstens eine Werkstückparameter vor dem Bearbeitungsvorgang durch eine Erfassungseinrichtung erfasst wird und einer Steuerungseinrichtung übermittelt wird, welche zumindest die Förderbewegung der Fördereinrichtung in Abhängigkeit von dem wenigstens einen Werkstückparameter steuert oder regelt.

Die Erfassungseinrichtung kann insbesondere vor dem Bearbeitungsaggregat angeordnet sein und einen oder mehrere Sensoren, beispielsweise kapazitive Sensoren, optische Sensoren, taktile Sensoren oder dergleichen, zum Erfassen der Werkstückparameter aufweisen. Dadurch kann vor dem Bearbeitungsvorgang für jedes Werkstück der wenigstens eine Werkstückparameter bestimmt werden und an die Steuerungseinrichtung übermittelt werden. Die Erfassungseinrichtung kann sowohl integral mit der Bearbeitungseinrichtung bzw. der Fördereinrichtung ausgebildet sein oder auch als separate Einheit vorgesehen sein.

Das Verfahren kann zudem vorsehen, dass durch die Steuerungseinrichtung die Verfahrbewegung des Bearbeitungsaggregats zum Ausführen des Bearbeitungsvorgangs für jedes zu bearbeitende Werkstück in Abhängigkeit von dem wenigstens einen Werkstückparameter gesteuert oder geregelt wird.

Auf diese Weise können der Bearbeitungsvorgang des Bearbeitungsaggregats sowie die Förderbewegung der Fördereinrichtung für jedes Werkstück in Abhängigkeit von dem wenigstens einen Werkstückparameter individuell aufeinander abgestimmt werden. Die Werkstücke können dadurch bei deren Bearbeitung jeweils mit einer optimalen Fördergeschwindigkeit gefördert werden, sodass neben der Sicherstellung einer hohen Bearbeitungsqualität eine signifikante Verkürzung der Bearbeitungszeiten ermöglicht sein kann.

In einer Weiterbildung des Verfahrens kann zumindest ein weiteres Bearbeitungsaggregat, das zum Bearbeiten der Werkstücke in Durchlaufrichtung nachfolgend oder vorhergehend angeordnet ist, durch die Steuerungseinrichtung in Abhängigkeit von dem wenigstens einen Werkstückparameter angesteuert oder geregelt werden.

Das zumindest eine weitere Bearbeitungsaggregat kann sowohl ein weiteres Bearbeitungsaggregat der Bearbeitungseinrichtung als auch ein Bearbeitungsaggregat einer zusätzlichen Bearbeitungseinrichtung sein. Durch die Aneinanderreihung mehrerer Bearbeitungsaggregate bzw. Bearbeitungseinrichtungen können verschiedene Bearbeitungsschritte für die Werkstücke aufeinanderfolgend vorgesehen sein. Das zumindest eine weitere Bearbeitungsaggregat kann ebenfalls zum Bearbeiten einer Werkstückoberfläche, einer Werkstückkante oder eines am Werkstück angebrachten Beschichtungsmaterials ausgebildet sein. Ebenso kann es sich bei dem zumindest einem weiteren Bearbeitungsaggregat um eine Beschichtungseinrichtungen, eine Haftmittelauftragseinrichtung, eine Druckeinrichtung oder dergleichen handeln. Indem die Steuerungseinrichtung das zumindest eine weitere Bearbeitungsaggregat bzw. die weitere Bearbeitungseinrichtung in Abhängigkeit von dem wenigstens einen Werkstückparameter ansteuert, können die Bearbeitungsvorgänge der verschiedenen Bearbeitungsaggregate auf die angepasste Förderbewegung des jeweilig zu bearbeitenden Werkstücks abgestimmt werden.

Die Aufgabe wird zudem durch eine Steuerungseinrichtung für eine Bearbeitungseinrichtung zum Bearbeiten von Werkstücken, die bevorzugt zumindest teilweise aus Holz, Holzwerkstoffen, Kunststoff, Verbundwerkstoff oder dergleichen ausgebildet sind, gelöst, wobei die Steuerungseinrichtung eingerichtet ist eine Förderbewegung einer Fördereinrichtung, die Werkstücke in einer Durchlaufrichtung zu einem Bearbeitungsaggregat der Bearbeitungseinrichtung bewegt, zum Ausführen eines Bearbeitungsvorgangs für jedes Werkstück in Abhängigkeit von wenigstens einem Werkstückparameter des zu bearbeitenden Werkstücks anzupassen.

Durch eine solche Steuerungseinrichtung kann eine variable Steuerung oder Regelung der Bearbeitungseinrichtung vorgesehen sein. Auf diese Weise kann ein an jedes zu bearbeitende Werkstück angepasster Betrieb der Bearbeitungseinrichtung ermöglicht sein. Durch diesen kann eine höhere Leistung bzw. Produktivität der Bearbeitungseinrichtung erreicht werden.

Des Weiteren wird die Aufgabe durch eine Bearbeitungseinrichtung zum Bearbeiten von Werkstücken, die bevorzugt zumindest teilweise aus Holz, Holzwerkstoffen, Kunststoff, Verbundwerkstoff oder dergleichen ausgebildet sind, mit wenigstens einem Bearbeitungsaggregat, das zum Ausführen eines Bearbeitungsvorgangs relativ zu den zu bearbeitenden Werkstücken verfahrbar ist, und mit einer Fördereinrichtung zum Herbeiführen einer Förderbewegung zwischen dem wenigstens einen Bearbeitungsaggregat und den zu bearbeitenden Werkstücken, gelöst, wobei eine Steuerungseinrichtung vorgesehen ist, die eingerichtet ist, die Förderbewegung der Fördereinrichtung zum Ausführen eines Bearbeitungsvorgangs für jedes Werkstück in Abhängigkeit von wenigstens einem Werkstückparameter des zu bearbeitenden Werkstücks anzupassen.

Mit einer solchen Bearbeitungseinrichtung kann bei der Bearbeitung für jedes Werkstück eine dynamisch anpassbare Förderbewegung ausgeführt werden. Indem diese in Abhängigkeit von dem wenigstens einen Werkstückparameter angepasst wird, können die Förderbewegung und der Bearbeitungsvorgang individuell aufeinander abgestimmt werden. Diese individuell anpassbare Förderbewegung kann eine Verkürzung der Bearbeitungszeiten und somit eine Steigerung der Produktivität der Bearbeitungseinrichtung ermöglichen.

### Kurze Beschreibung der Zeichnungen

Weitere Merkmale und Vorteile einer Vorrichtung, einer Verwendung und/oder eines Verfahrens ergeben sich aus der nachfolgenden Beschreibung von Ausführungsformen unter Bezugnahme auf die beiliegenden Zeichnungen. Von diesen Zeichnungen zeigt:
- Fig. 1: eine perspektivische Ansicht einer exemplarischen Ausführungsform einer Bearbeitungseinrichtung;
- Fig. 2: eine schematische Darstellung einer Fördereinrichtung der Bearbeitungseinrichtung in Figur 1;
- Fig. 3: eine schematische Darstellung eines Verfahrweges eines Bearbeitungsaggregats zu einem Werkstück;

### Beschreibung von Ausführungsformen

Gleiche Bezugszeichen, die in verschiedenen Figuren aufgeführt sind, benennen identische, einander entsprechende, oder funktionell ähnliche Elemente.

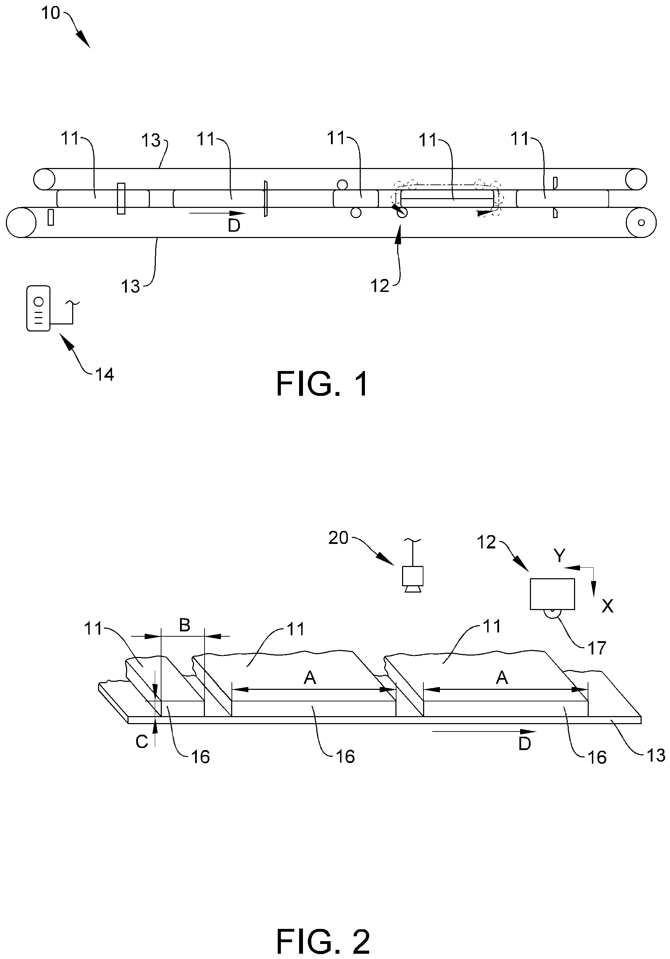

Figur 1 zeigt eine schematische Ansicht einer exemplarischen Ausführungsform einer Bearbeitungseinrichtung 10. Bevorzugt ist diese Bearbeitungseinrichtung 10 eine Holzbearbeitungseinrichtung. Die Bearbeitungseinrichtung 10 ist insbesondere als eine Durchlaufmaschine ausgebildet, bei welcher die Werkstücke 11 für einen Bearbeitungsvorgang in einer Durchlaufrichtung D relativ zu wenigstens einem Bearbeitungsaggregat 12 der Bearbeitungseinrichtung 10 bewegt werden. Hierzu ist eine Fördereinrichtung 13 vorgesehen, welche die Werkstücke 11 im Durchlaufverfahren zum Bearbeitungsaggregat 12 fördert. Bei diesem Durchlaufverfahren werden die Werkstück 11 nacheinander zum Bearbeitungsaggregat 12 gefördert, wobei die Werkstücke 11 während des Bearbeitungsvorgangs auf der Fördereinrichtung 13 aufliegen. Insbesondere wird der Bearbeitungsvorgang während der Förderbewegung der Werkstücke 11 ausgeführt. Die Bearbeitungseinrichtung 10 weist eine Steuerungseinrichtung 14 auf, welche das Bearbeitungsaggregat 12 und die Fördereinrichtung 13 steuert oder regelt. Die Bearbeitungseinrichtung 10 kann als eine CNC-Maschine ausgebildet sein, bei der die Bearbeitung der Werkstücke 11 stationär oder im Durchlauf vorgesehen ist.

Die zu bearbeitenden Werkstücke 11 sind vorzugsweise zumindest teilweise aus Holz, Holzwerkstoffen, Kunststoff, einem Verbundwerkstoff oder dergleichen ausgebildet. Bei den Werkstücken 11 kann es sich um plattenförmige Werkstücke handeln. Diese Werkstücke 11 können beispielsweise für die Möbel- oder Bauelementefertigung vorgesehen sein, z.B. in Form von Massivholzplatten, Spanplatten, Leichtbauplatten, Sandwichplatten, Profilleisten, Zierleisten oder dergleichen.

Die Bearbeitungseinrichtung 10 kann ein Bearbeitungsaggregat 12 oder mehrere Bearbeitungsaggregate 12 zum Bearbeiten der Werkstücke 11 aufweisen. Das Bearbeitungsaggregat 12 umfasst zumindest ein Bearbeitungswerkzeug, zum Bearbeiten einer Werkstückoberfläche, einer Werkstückkante oder eines am Werkstück 11 angebrachten Beschichtungsmaterials. Insbesondere ist das Bearbeitungsaggregat 12 als ein Fräsaggregat, beispielsweise zum Bearbeiten einer Werkstückkante, ausgebildet. Das Fräsaggregat weist zumindest ein Fräswerkzeug auf. Ebenso kann das Bearbeitungswerkzeug ein Sägewerkzeug, Kappwerkzeug, eine Profilziehklinge oder dergleichen sein. Zum Positionieren des Bearbeitungsaggregats 12 zu dem zu bearbeitenden Werkstück 11 kann das Bearbeitungsaggregat 12 eine nicht näher dargestellte Tasteinrichtung aufweisen.

Das Bearbeitungsaggregat 12 umfasst eine nicht näher dargestellte Stelleinrichtung, durch welche eine Stellbewegung des Bearbeitungsaggregats 12 ansteuerbar ist. Durch die Stelleinrichtung kann das Bearbeitungsaggregat 12 während der Förderbewegung des Werkstücks 11 für den Bearbeitungsvorgang relativ zum Werkstück 11 verfahrbar vorgesehen sein. Die Stelleinrichtung kann eine Verfahrbewegung des Bearbeitungsaggregats 12 in eine X-Richtung, Y-Richtung und/oder Z-Richtung ansteuern.

Figur 2 zeigt eine schematische Darstellung der Fördereinrichtung 13 mit mehreren exemplarischen, zu bearbeitenden Werkstücken 11. Die Werkstücke 11 liegen beabstandet zueinander auf der Fördereinrichtung 13 auf und werden in die Durchlaufrichtung D gefördert. Auf diese Weise werden die Werkstücke 11 aufeinanderfolgend zu einem Bearbeitungsbereich des Bearbeitungsaggregats 12 gefördert und nacheinander durch das Bearbeitungsaggregat 12 bearbeitet.

Gemäß Figur 2 sind die Werkstücke 11 als plattenförmige Werkstücke ausgebildet. Die einzelnen Werkstücke 11 können unterschiedliche Werkstückparameter aufweisen, d.h. beispielsweise eine unterschiedliche Werkstücklänge, eine unterschiedliche Werkstückdicke und/oder eine unterschiedliche Werkstückbreite. Die drei Werkstücke 11 in Figur 2 weisen exemplarisch jeweils die gleiche Werkstückdicke C auf, wobei zwei Werkstücke 11 die gleiche Werkstücklänge A aufweisen und ein drittes Werkstück 11 eine Werkstücklänge B. Die Werkstücke 11 mit der Werkstücklänge A bilden beispielhaft ein zu bearbeitendes "langes Werkstück" und das Werkstück 11 mit der Werkstücklänge B beispielhaft ein zu bearbeitendes "kurzes Werkstück", anhand derer nachfolgend ein erfindungsgemäßes Verfahren zum Bearbeiten der Werkstücke 11 beschrieben wird.

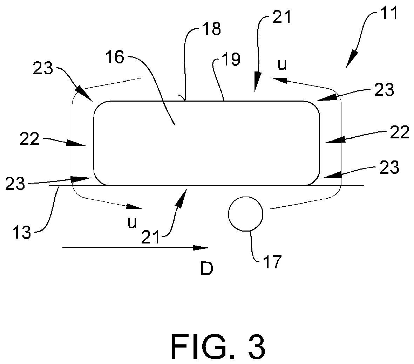

Zum Bestimmen der Werkstückparameter der zu bearbeitenden Werkstücke 11 ist der Fördereinrichtung 13 eine Erfassungseinrichtung 20 zugeordnet. Diese Erfassungseinrichtung 20 kann einen oder mehrere Sensoren aufweisen, durch welche die Werkstückparameter der Werkstück 11 erfasst werden. Der Sensor ist beispielsweise als kapazitiver Sensor, optischer Sensor, taktiler Sensor oder dergleichen ausgebildet. Die Erfassungseinrichtung 20 kann sowohl integral mit der Fördereinrichtung 13 oder der Bearbeitungseinrichtung 10 ausgebildet sein als auch als separate Einheit vorgesehen sein, wie dies beispielhaft in Figur 2 dargestellt ist. Die Erfassungseinrichtung 20 ist mit der Steuerungseinrichtung 14 verbunden, um die erfassten Werkstückparameter an die Steuerungseinrichtung 14 zu übermitteln. Die Steuerungseinrichtung 14 steuert in Abhängigkeit von den Werkstückparametern die Förderbewegung der Werkstück 11 durch die Fördereinrichtung 13, vorzugsweise die Förderbewegung sowie das Bearbeitungsaggregat 12 zum Ausführen des Bearbeitungsvorgangs, was nachfolgend bezüglich Figur 3 näher beschrieben wird.

Figur 3 zeigt ein zu bearbeitendes Werkstück 11 in einer Seitenansicht auf eine Schmalfläche 16 des Werkstücks 11, wobei das Bearbeitungswerkzeug 17 des Bearbeitungsaggregats 12 schematisch angedeutet ist. Dieses ist als Fräswerkzeug ausgebildet, das zum Bearbeiten des Werkstücks 11 entlang der Längsseiten 21 des Werkstücks 11 und/oder entlang der Dickenseiten 22 und/oder entlang der Eckbereiche 23 verfahren wird, während das Werkstück 11 in die Durchlaufrichtung D gefördert wird. Dies ist durch die Pfeile U in Figur 3 angedeutet. Insbesondere wird durch das Bearbeitungswerkzeug 17 eine die Schmalfläche 16 begrenzende umlaufende Werkstückkante 19 bearbeitet.

Bei dem Bearbeiten eines Werkstücks 11 mit der Werkstücklänge A, d.h. bei einem "langen Werkstück", kann das Bearbeitungsaggregat 12 technisch bedingt beim Bearbeiten der längeren Längsseiten 21 eine schnellere Verfahrbewegung ausführen als entlang der kürzeren Dickenseiten 22 sowie in den Eckbereichen 23.

Bei dem Bearbeiten eines Werkstücks 11 mit der Werkstücklänge B, d.h. bei einem "kurzen Werkstück", kann es aufgrund einer kürzeren Werkstücklänge 21 verfahrensbedingt erforderlich sein, dass das Bearbeitungsaggregat 12 sowohl entlang der Dickenseite 22 und in den Eckbereichen 23 als auch entlang der Längsseiten 21 eine verlangsamte Verfahrbewegung ausführt. Daraus kann gegenüber einem längeren Werkstück 11 eine verlängerte Bearbeitungszeit für die Bearbeitung eines kurzen Werkstücks 11 resultieren. Ebenso verlängert sich die Bearbeitungszeit in Abhängigkeit von einer Vergrößerung der Werkstückdicke C des zu bearbeitenden Werkstücks 11.

Aufgrund der unterschiedlichen Bearbeitungszeiten ist es erforderlich die Förderbewegung der Werkstücke 11 an den Bearbeitungsvorgang jedes Werkstücks 11 anzupassen. Unter Förderbewegung ist insbesondere eine Geschwindigkeit, eine Beschleunigung und/oder eine Verzögerung der Förderbewegung der Werkstücke 11 zu verstehen. Dabei erfordert eine längere Bearbeitungszeit eines Werkstücks 11 eine Reduzierung der Fördergeschwindigkeit, d.h. eine gegenüber einem "langen Werkstück" langsamere Fördergeschwindigkeit, damit der Mitfahrweg des Bearbeitungsaggregats 12 für die Bearbeitung des Werkstücks 11 innerhalb des Bearbeitungsbereichs des Bearbeitungsaggregats 12 während der Förderbewegung des Werkstücks 11 ausreicht.

Aus diesem Grund wird bei dem erfindungsgemäßen Verfahren die Förderbewegung der Fördereinrichtung 13 zum Ausführen des Bearbeitungsvorgangs für jedes Werkstück 11 in Abhängigkeit von wenigstens einem Werkstückparameter des zu bearbeitenden Werkstücks 11 angepasst. Bei dem wenigstens einen Werkstückparameter, anhand dessen die Förderbewegung der Fördereinrichtung 13 angepasst wird, handelt es sich insbesondere um die Werkstücklänge A, B, die Werkstückdicke C, eine Werkstückbreite und/oder die zu bearbeitende Werkstückkontur 18 des jeweiligen zu bearbeitenden Werkstücks 11. Insbesondere wird die Förderbewegung in Abhängigkeit von einer Kombination aus diesen Werkstückparametern angepasst.

Dabei wird die Förderbewegung der Werkstücke 11 für jedes zu bearbeitende Werkstück 11 individuell in Abhängigkeit des wenigstens einen Werkstückparameters angepasst. Die Förderbewegung wird angepasst, wenn sich das jeweilige zu bearbeitende Werkstück 11 auf der Fördereinrichtung 13 kurz vor dem Bearbeitungsaggregat 12 befindet. Insbesondere wird die Förderbewegung der Werkstücke 11 angepasst, wenn aufeinanderfolgend zu bearbeitende Werkstücke 11 zueinander abweichende Werkstückparameter aufweisen. D.h. die Förderbewegung wird verlangsamt, wenn das jeweilige Werkstück 11 eine längere Bearbeitungszeit durch das Bearbeitungsaggregat 12 erfordert, und die Förderbewegung erhöht, wenn das Werkstück 11 eine kürzere Bearbeitungszeit durch das Bearbeitungsaggregat 12 ermöglicht. Bevorzugt wird die Förderbewegung für jeden Bearbeitungsvorgang an einem Werkstück 11 in Abhängigkeit des wenigstens einen Parameters des Werkstücks 11 auf eine ideale Fördergeschwindigkeit, bevorzugt eine maximal mögliche Fördergeschwindigkeit, geregelt. Dagegen bleibt die Förderbewegung konstant, wenn aufeinanderfolgend zu bearbeitende Werkstücke 11 gleiche oder ähnliche Werkstückparameter aufweisen. Auf diese Weise ist mit der Bearbeitungseinrichtung 10 ein variabel an die Abmessungen der zu bearbeitenden Werkstücke 11 angepasster Bearbeitungsbetrieb ermöglicht, durch welchen eine höhere Leistung bzw. Produktivität der Bearbeitungseinrichtung 10 erreicht wird.

Die Werkstückparameter werden vor dem Bearbeitungsvorgang jedes Werkstücks 11 durch die Erfassungseinrichtung 20 erfasst und der Steuerungseinrichtung 14 übermittelt. Ebenso kann vorgesehen sein, dass die Werkstückparameter in der Steuerungseinrichtung 14 hinterlegt sind oder der Steuerungseinrichtung 14 von einer externen Einrichtung übermittelt werden. In Abhängigkeit von den erfassten und an die Steuerungseinrichtung 14 übermittelten Werkstückparametern, der voreingestellten Fördergeschwindigkeit der Fördereinrichtung 13 und/oder der durch das Bearbeitungsaggregat 12 zu bearbeitenden Bearbeitungskontur steuert die Steuerungseinrichtung 14 die Förderbewegung der Fördereinrichtung 13 sowie die Verfahrbewegung des Bearbeitungsaggregats 12.

Es kann zudem vorgesehen sein, dass die Steuerungseinrichtung 14 in Abhängigkeit von dem wenigstens einen Werkstückparameter zumindest ein weiteres Bearbeitungsaggregat zum Bearbeiten der Werkstücke 11 steuert. Insbesondere handelt es sich dabei um ein Bearbeitungsaggregat einer weiteren Bearbeitungseinrichtung, welches in Durchlaufrichtung D zu dem Bearbeitungsaggregat 12 nachfolgend oder vorhergehend angeordnet ist. Dadurch kann auch durch das wenigstens eine nachfolgende oder vorhergehende Bearbeitungsaggregat ein auf die für das jeweilige Werkstück 11 angepasste Förderbewegung angepasster bzw. abgestimmter Bearbeitungsvorgang ausgeführt werden.

Das zumindest eine weitere Bearbeitungsaggregat kann sowohl zum Ausführen eines Bearbeitungsvorgangs an einer Werkstückoberfläche, einer Werkstückkante oder eines am Werkstück angebrachten Beschichtungsmaterials ausgebildet sein oder als eine Beschichtungseinrichtung, eine Haftmittelauftragseinrichtung, eine Druckeinrichtung oder dergleichen ausgebildet sein.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Verfahren zum Bearbeiten von Werkstücken (11), die bevorzugt zumindest teilweise aus Holz, Holzwerkstoffen, Kunststoff, Verbundwerkstoff oder dergleichen ausgebildet sind, durch eine Bearbeitungseinrichtung (10), wobei die Werkstücke (11) mittels einer Fördereinrichtung (13) in einer Durchlaufrichtung (D) zu einem Bearbeitungsaggregat (12) der Bearbeitungseinrichtung (10) bewegt werden und das Bearbeitungsaggregat (12) zum Ausführen eines Bearbeitungsvorgangs relativ zu den sich in Durchlaufrichtung (D) bewegenden Werkstücken (11) verfahren wird, **dadurch gekennzeichnet, dass** die Förderbewegung der Fördereinrichtung (13) zum Ausführen des Bearbeitungsvorgangs für jedes Werkstück (11) in Abhängigkeit von wenigstens einem Werkstückparameter des zu bearbeitenden Werkstücks (11) angepasst wird.

2. Verfahren nach Anspruch 1, bei dem ferner die Förderbewegung des zu bearbeitenden Werkstücks (11) in Abhängigkeit von wenigstens einem zwischen den zu bearbeitenden Werkstücken (11) abweichenden Werkstückparameter angepasst wird.

3. Verfahren nach Anspruch 1 oder 2, bei dem ferner die Förderbewegung der Fördereinrichtung (13) in Abhängigkeit von wenigstens einer Werkstücklänge (A, B), einer Werkstückdicke (C), einer Werkstückbreite und/oder einer Werkstückkontur (18) des zu bearbeitenden Werkstücks (11) angepasst wird.

4. Verfahren nach einem der vorhergehenden Ansprüche, bei dem ferner der wenigstens eine Werkstückparameter vor dem Bearbeitungsvorgang durch eine Erfassungseinrichtung (20) erfasst wird und einer Steuerungseinrichtung (14) übermittelt wird, welche zumindest die Förderbewegung der Fördereinrichtung (13) in Abhängigkeit von dem wenigstens einen Werkstückparameter steuert oder regelt.

5. Verfahren nach Anspruch 4, bei dem ferner durch die Steuerungseinrichtung (14) die Verfahrbewegung des Bearbeitungsaggregats (12) zum Ausführen des Bearbeitungsvorgangs für jedes zu bearbeitende Werkstück (11) in Abhängigkeit von dem wenigstens einen Werkstückparameter gesteuert oder geregelt wird.

6. Verfahren nach Anspruch 4 oder 5, bei dem ferner zumindest ein weiteres Bearbeitungsaggregat (12), das zum Bearbeiten der Werkstücke (11) in Durchlaufrichtung (D) nachfolgend oder vorhergehend angeordnet ist, durch die Steuerungseinrichtung (14) in Abhängigkeit von dem wenigstens einen Werkstückparameter angesteuert oder geregelt wird.

7. Steuerungseinrichtung für eine Bearbeitungseinrichtung zum Bearbeiten von Werkstücken (11), die bevorzugt zumindest teilweise aus Holz, Holzwerkstoffen, Kunststoff, Verbundwerkstoff oder dergleichen ausgebildet sind, wobei die Steuerungseinrichtung (14) eingerichtet ist eine Förderbewegung einer Fördereinrichtung (13), durch welche Werkstücke (11) in einer Durchlaufrichtung (D) zu einem Bearbeitungsaggregat (12) der Bearbeitungseinrichtung (10) bewegt werden, zum Ausführen eines Bearbeitungsvorgangs für jedes Werkstück (11) in Abhängigkeit von wenigstens einem Werkstückparameter des zu bearbeitenden Werkstücks (11) anzupassen.

8. Steuerungseinrichtung nach Anspruch 7, die ferner eingerichtet ist ein Verfahren nach einem der Ansprüche 1 bis 6 auszuführen.

9. Bearbeitungseinrichtung (10) zum Bearbeiten von Werkstücken (11), die bevorzugt zumindest teilweise aus Holz, Holzwerkstoffen, Kunststoff, Verbundwerkstoff oder dergleichen ausgebildet sind, mit wenigstens einem Bearbeitungsaggregat (12), das zum Ausführen eines Bearbeitungsvorgangs relativ zu den zu bearbeitenden Werkstücken (11) verfahrbar ist, und mit einer Fördereinrichtung (13) zum Herbeiführen einer Förderbewegung zwischen dem wenigstens einen Bearbeitungsaggregat (12) und den zu bearbeitenden Werkstücken (11), **dadurch gekennzeichnet, dass** eine Steuerungseinrichtung (14) vorgesehen ist, die eingerichtet ist, die Förderbewegung der Fördereinrichtung (13) zum Ausführen eines Bearbeitungsvorgangs für jedes Werkstück (11) in Abhängigkeit von wenigstens einem Werkstückparameter des zu bearbeitenden Werkstücks (11) anzupassen.

10. Bearbeitungseinrichtung nach Anspruch 9, bei der ferner die Steuerungseinrichtung (14) eingerichtet ist, ein Verfahren nach einem der Ansprüche 1 bis 6 auszuführen.
